# EUROPÄISCHE PATENTSCHRIFT

(11) **EP 1 112 888 B1**
(45) Veröffentlichungstag und Bekanntmachung des Hinweises auf die Patenterteilung: **12.12.2007**
(21) Anmeldenummer: 00125206.3
(22) Anmeldetag: 22.11.2000
(51) Int. Cl.: B60K 31/00

(54) **Verfahren zur Geschwindigkeits- und Abstandsregelung eines Kraftfahrzeuges**
Method for adaptive cruise control with regulation of inter-vehicle spacing
Régulateur de vitesse avec régulation de la distance entre deux véhicules

(30) Priorität: 27.12.1999 DE 19963224
(43) Veröffentlichungstag der Anmeldung: 04.07.2001
(73) Patentinhaber: Volkswagen Aktiengesellschaft, 38436 Wolfsburg (DE)
(72) Erfinder: Ruchatz, Thomas, Dipl.-Ing., 38165 Lehre (DE)

(56) Entgegenhaltungen:
- EP-A- 0 846 587
- EP-A- 0 928 714
- DE-A- 19 901 175

## Beschreibung

Die Erfindung betrifft ein Verfahren zur Regelung der Geschwindigkeit eines Kraftfahrzeuges und des Abstandes des Kraftfahrzeuges zu mindestens einem vorausfahrenden Kraftfahrzeug, bei dem eine den Sicherheitsabstand aₛ zu dem vorausfahrenden Kraftfahrzeug definierende Sicherheitszeit tₛ innerhalb vorgegebener Grenzen t_{s,min} und t_{s,max} eingestellt wird, bei dem mit Hilfe einer Erfassungseinrichtung die Geschwindigkeit v des Kraftfahrzeuges sowie der Abstand a zu dem vorausfahrenden Kraftfahrzeug bestimmt werden, und bei dem der Sicherheitsabstand aₛ aus der Geschwindigkeit v des Kraftfahrzeuges und der Sicherheitszeit tₛ berechnet wird und bei einer Abweichung des erfaßten Abstandes a vom Sicherheitsabstand aₛ das Kraftfahrzeug abgebremst oder beschleunigt wird.

Ein derartiges Verfahren ist aus dem Stand der Technik der EP 0 846 587 A1 bekannt. Ein besonderes Problem bei der Abstandsregelung besteht darin, daß ein erfaßtes Objekt, also ein vorausfahrendes Kraftfahrzeug, während einer Kurvenfahrt aus dem Erfassungsbereich der Erfassungseinrichtung verloren geht. Dieses geschieht nur solange, bis das Kraftfahrzeug selbst soweit durch die Kurve gefahren ist, daß dessen Erfassungseinrichtung das vorausfahrende Kraftfahrzeug wieder erfaßt und den Abstand auf das vorausfahrende Kraftfahrzeug erneut einregeln kann. Aus dem Stand der Technik ist bekannt, daß in aufwendiger Weise verschiedene Szenerien überprüft werden, um die Reaktion des Kraftfahrzeuges auf die neue Situation einzustellen. Als Szenerien werden dabei neben einer möglichen Kurvenfahrt ein möglicher Überholvorgang oder ein Abbiegen des zuvor erfaßten vorausfahrenden Objektes genannt. Erst nach der Festlegung der zum Verlust des erfaßten Objektes führenden Situation wird das Fahrverhalten des Kraftfahrzeuges darauf eingestellt.

Die EP 0 899 148 A2 offenbart ein Verfahren zur Bestimmung eines Regelobjektes, bei dem sowohl bei langsamen als auch kurzfristigen und plötzlichen Änderungen des Kurvenradius des Kraftfahrzeuges zuverlässig das Fahrverhalten des Kraftfahrzeuges auf das Regelobjekt geregelt wird. Dieses geschieht dadurch, dass, nachdem das Regelobjekt die Fahrspur des Kraftfahrzeuges verlassen hat, die aktuelle Position des Kraftfahrzeuges mit einer aus einer tatsächlich erfassten Position des Regelobjektes abgeleiteten Projektion des Regelobjektes auf die aktuelle Position des Kraftfahrzeuges verglichen wird und bei annähernder Übereinstimmung der Projektion und der aktuellen Position des Kraftfahrzeuges der Abstand des Kraftfahrzeuges weiterhin auf das Regelobjekt geregelt wird. Somit wird die aktuelle Position des Kraftfahrzeuges mit Informationen aus der Vergangenheit des Regelobjektes verglichen. Mit anderen Worten ergibt sich für jedes Regelobjekt gedanklich eine Schleppe, die es hinter sich herzieht. Somit wird zwar offenbart, wie die Regelung ablaufen kann, wenn das Regelobjekt die Fahrspur des Kraftfahrzeuges, bspw. beim Einfahren in eine Kurve verlassen hat, jedoch befindet sich das Regelobjekt durchgängig im Erfassungsbereich der Erfassungseinrichtung.

Aus der EP 0 928 714 A2 ist ein Verfahren zur Regelung der Geschwindigkeit eines Kraftfahrzeuges und des Abstandes des Kraftfahrzeuges zu mindestens einem vorausfahrenden Kraftfahrzeug bekannt, bei dem eine den Sicherheitsabstand zu dem vorausfahrenden Kraftfahrzeug definierende Sicherheitszeit innerhalb vorgegebener Grenzen eingestellt wird, bei dem mit Hilfe einer Erfassungseinrichtung die Geschwindigkeit des Kraftfahrzeuges sowie der Abstand zu dem vorausfahrenden Kraftfahrzeug bestimmt werden und bei dem der Sicherheitsabstand aus der Geschwindigkeit des Kraftfahrzeuges und der Sicherheitszeit berechnet wird und bei einer Abweichung des erfassten Abstandes vom Sicherheitsabstand das Kraftfahrzeug abgebremst oder beschleunigt wird, wobei während eines Verlustes des vorausfahrenden Kraftfahrzeuges aus dem Erfassungsbereich der Erfassungseinrichtung die im Zeitpunkt vor dem Verlust gefahrene Geschwindigkeit solange beibehalten wird, bis eine vorgegebene Verzögerungszeit abgelaufen ist oder bis erneut ein vorausfahrendes Kraftfahrzeug von der Erfassungseinrichtung als Regelobjekt erfasst wird.

Der vorliegenden Erfindung liegt daher das technische Problem zugrunde, ein Verfahren anzugeben, das in einfacher Weise die Regelung der Geschwindigkeit und des Abstandes des Kraftfahrzeuges zu mindestens einem vorausfahrenden Kraftfahrzeug in einfacher, und zugleich zuverlässiger Weise durchführt.

Das zuvor aufgezeigte technische Problem ist erfindungsgemäß durch ein Verfahren mit den Merkmale des Anspruches 1 gelöst. Das Verfahren zur Regelung der Geschwindigkeit eines Kraftfahrzeuges und des Abstandes des Kraftfahrzeuges zu mindestens einem vorausfahrenden Kraftfahrzeug, bei dem eine den Sicherheitsabstand zu dem vorausfahrenden Kraftfahrzeug definierende Sicherheitszeit innerhalb vorgegebener Grenzen eingestellt wird, bei dem mit Hilfe einer Erfassungseinrichtung die Geschwindigkeit des Kraftfahrzeuges sowie der Abstand zu dem vorausfahrenden Kraftfahrzeug bestimmt werden und bei dem der Sicherheitsabstand aus der Geschwindigkeit des Kraftfahrzeuges und der Sicherheitszeit berechnet wird und bei einer Abweichung des erfassten Abstandes vom Sicherheitsabstand das Kraftfahrzeug abgebremst oder beschleunigt wird, wobei während eines Verlustes des vorausfahrenden Kraftfahrzeuges aus dem Erfassungsbereich der Erfassungseinrichtung die im Zeitpunkt vor dem Verlust gefahrene Geschwindigkeit solange beibehalten wird, bis eine vorgegebene Verzögerungszeit abgelaufen ist oder bis erneut ein vorausfahrendes Kraftfahrzeug von der Erfassungseinrichtung als Regelobjekt erfasst wird, ist dadurch gekennzeichnet, dass der Wert der Verzögerungszeit als lineare Funktion der Sicherheitszeit bestimmt wird, wobei die Steigung der linearen Funktion kleiner eins gesetzt wird, oder als nichtlineare Funktion der Sicherheitszeit bestimmt wird, wobei die Steigung der nichtlinearen Funktion ausgehend von einem Ausgangswert stetig auf einen maximalen Wert vergrößert wird, wobei der Wert der Verzögerungszeit für die maximale Sicherheitszeit kleiner der maximalen Sicherheitszeit eingestellt wird.

Dem liegt die Erkenntnis zugrunde, dass in einer normalen Fahrsituation bei Verlust des Regelobjektes aus dem Erfassungsbereich der Erfassungseinrichtung eine Weiterfahrt des Kraftfahrzeuges über einen vorgegebenen Zeitraum unter Beibehaltung der bisherigen Geschwindigkeit möglich ist, ohne dass sich daraus eine besondere Gefahrensituation ergibt und ohne dass es erforderlich ist, das Kraftfahrzeug zu beschleunigen. Insbesondere bei einer Kurvenfahrt ergibt sich, dass das vorausfahrende Kraftfahrzeug den Erfassungsbereich der Erfassungseinrichtung erst dann verlässt, wenn es bereits weit in die Kurve eingefahren ist.

Wenn das Kraftfahrzeug dann mit der im Zeitpunkt des Verlustes des Regetobjektes eingestellten Geschwindigkeit weiter fährt, so befindet es sich nach Ablauf der Verzögerungszeit ebenfalls bereits weit genug in der Kurve, um erneut das vorausfahrende kraftfahrzeug zu erfassen. Somit wird in den meisten Fällen die Verzögerungszeit ausreichen, um den vorübergehenden Verlust eines vorausfahrenden Kraftfahrzeuges aus dem Erfassungsbereich der Erfassungseinrichtung zu überbrücken. Mit anderen Worten befindet sich das Kraftfahrzeug nach Ablauf der Verzögerungszeit im Bereich des Ortes, wo das vorausfahrende Kraftfahrzeug in der Kurve verloren gegangen ist.

Dabei wird der Wert der Verzögerungszeit als lineare Funktion der Sicherheitszeit bestimmt, wobei die Steigung der linearen Funktion kleiner 1 gesetzt wird. Dadurch ergibt sich eine direkte Abhängigkeit zwischen der Verzögerungszeit und der Sicherheitszeit. Ist die Steigung s = 1, so stimmt die Verzögerungszeit mit der Sicherheitszeit überein, so dass sich das Kraftfahrzeug nach Ablauf der Sicherheitszeit genau an dem Ort befindet, wo das vorausfahrende Kraftfahrzeug im Zeitpunkt des Verlustes aus dem Erfassungsbereich der Erfassungseinrichtung befand. Ist die Steigung dagegen kleiner als 1, so wird die Geschwindigkeit über einen geringeren Zeitraum als die Sicherheitszeit beibehalten.

Ist die Berechnung der Verzögerungszeit so eingestellt, dass diese kleiner als die Sicherheitszeit ist, wird der Komfort der gesamte Abstandsregelung für einen Benutzer erhöht. Schert beispielsweise das Kraftfahrzeug hinter einem vorausfahrenden Kraftfahrzeug zu Beginn eines Überholvorganges aus, so wird nicht notwendiger Weise die Geschwindigkeit des Kraftfahrzeuges über einer vorgegeben volle Sicherheitszeit beibehalten, sondern eine Beschleunigung des Kraftfahrzeuges auf eine vorgegebene maximale Geschwindigkeit setzt früher ein, wodurch der Überholvorgang nicht zu lange verzögert wird. Somit wird die Durchführung des Verfahrens in einfacher Weise sowohl an die Kurvenfahrt als auch an Überholmanöver angepasst.

Alternativ wird der Wert der Verzögerungszeit als nichtlineare Funktion der Sicherheitszeit bestimmt, wobei vorzugsweise die Steigung der nichtlinearen Funktion ausgehend von einem Ausgangswert stetig auf einen maximalen Wert vergrößert wird. Dadurch werden im Bereich von kurzen Sicherheitszeiten entsprechend niedrige Verzögerungszeiten eingestellt. Erst im Bereich der maximalen Sicherheitszeiten liegen die Werte der Verzögerungszeiten im Bereich dieser maximalen Sicherheitszeit. Ein anderes Verfahren kann auch so durchgeführt werden, daß der Wert der Verzögerungszeit für die maximale Sicherheitszeit größer als die maximale Sicherheitszeit eingestellt wird.

Daraus ergibt sich ein Verzögerungsverhalten des Kraftfahrzeuges das den zugrunde liegenden Vorstellungen des Benutzers bezüglich des Fahrverhaltens entspricht. Stellt ein Benutzer eine kleine Sicherheitszeit ein, so ergeben sich relativ zu den gefahrenen Geschwindigkeiten geringe Sicherheitsabstände zu den vorausfahrenden Kraftfahrzeugen. Das zugrunde liegende Fahrverhalten kann somit als sportlich oder schnell bezeichnet werden. Bei einem solchen Fahrverhalten mit kurzen Sicherheitsabständen ist es während einer Kurvenfahrt und dem Verlust des vorausfahrenden Kraftfahrzeuges aus dem Erfassungsbereich der Erfassungseinrichtung nicht erforderlich, eine lange Verzögerungszeit einzustellen. Dieses macht sich dann auch bei Überholvorgängen positiv bemerkbar, wenn das geregelte Kraftfahrzeug auf die Überholspur wechselt und nicht erst nach einer vergleichsweise langen Verzögerungszeit beschleunigt wird. Ein sportliche Benutzer wird dieses Fahrverhalten erwarten und insofern auch bevorzugen.

Stellt der Benutzer dagegen eine große Sicherheitszeit ein, so kann ein entsprechend vorsichtiges oder langsames Fahrverhalten zugrunde gelegt werden. In diesem Fall sind auch lange Verzögerungszeiten vorgesehen, die ein komfortables Fahrverhalten auch in Kurven ermöglicht. Entsprechend dem vorsichtigen Fahrverhalten werden Überholvorgänge nicht so häufig vorkommen, so daß eine erst spät einsetzende Beschleunigung während eines Überholvorganges nicht als Komfortverlust vom Benutzer empfunden wird.

Lange Sicherheitszeiten werden auch bei Fahrsituationen eingestellt, die eine besondere Vorsicht erfordern. Dieses liegt insbesondere bei schlechten Verkehrsbedingungen wie bspw. Schneeglätte vor. So ist zu erwarten, daß insbesondere in nordischen Ländern während der Wintermonate auch bei schneebedeckten Fahrbahnen eine automatische Regelung des Abstandes des Kraftfahrzeuges zu einem vorausfahrenden Kraftfahrzeug auch mit mittleren Geschwindigkeiten angewendet wird. Insbesondere bei diesen Fahrsituationen werden Sicherheitszeiten eingestellt, die im Bereich der maximal einstellbaren Sicherheitszeiten liegen. Damit sind dann lange Verzögerungszeiten verbunden, so daß bei Verlust des Regelobjektes, also des vorausfahrenden Kraftfahrzeuges, das Fahrverhalten des Kraftfahrzeuges über einen vergleichsweise langen Zeitraum beibehalten wird. Es treten somit keine unnötigen Beschleunigungen des Kraftfahrzeuges auf, was insbesondere die Sicherheit auf schneebedeckten Fahrbahnen vorteilhaft ist.

In bevorzugter Weise wird der Wert der Sicherheitszeit auf einen Wert zwischen 1,0s und 4,0s während der Wert der Verzögerungszeit auf einen Wert zwischen 0,2s und 6,0s eingestellt wird.

Im folgenden wird die Erfindung anhand der Zeichnung näher erläutert. In der Zeichnung zeigen
- Fig. 1: eine erste Fahrsituation, in der das vorausfahrende Kraftfahrzeug aus dem Erfassungsbereich der Erfassungseinrichtung eines Kraftfahrzeuges heraus gefahren ist,
- Fig. 2: die in Fig. 1 dargestellt Fahrsituation nach Ablauf einer Verzögerungszeit,
- Fig. 3: eine graphische Darstellung der Abhängigkeit der Verzögerungszeit von der Sicherheitszeit mit linearer und nichtlinearer Funktion.

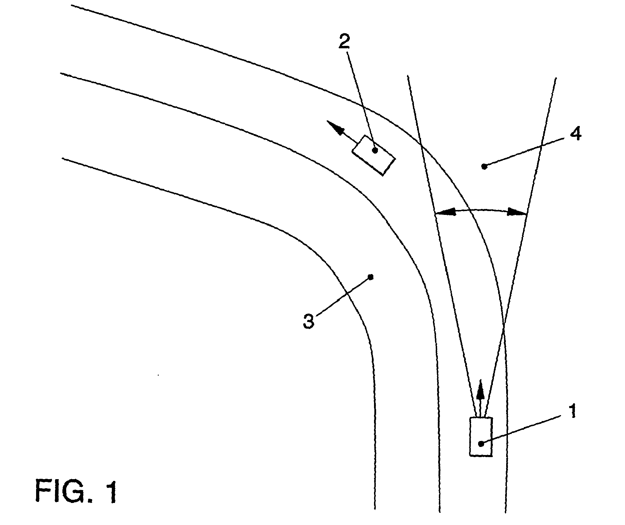

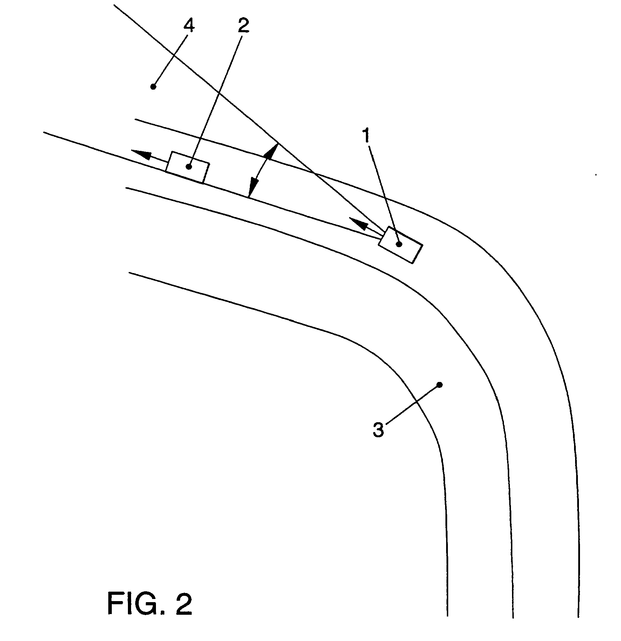

Die Fig. 1 und 2 zeigen zwei verschiedene Fahrsituationen im Bereich einer Straßenkurve, mit denen der Ablauf des erfindungsgemäßen Verfahrens im folgenden beschrieben werden soll.

Das Kraftfahrzeug 1, dessen Abstand zu einem vorausfahrenden Kraftfahrzeug 2 geregelt wird, befindet sich im Einfahrbereich einer Kurve 3. Die Bewegungsrichtung des Kraftfahrzeuges 1 ist mit dem in Fig. 1 nach oben gerichteten Pfeil angedeutet. Der Erfassungsbereich 4 der im Kraftfahrzeug 1 angeordneten Erfassungseinrichtung ist durch zwei Randstrahlen und einen Doppelpfeil dargestellt. Die Erfassungseinrichtung weist dazu einen Abstandssensor und eine Regelungseinheit auf.

Das Kraftfahrzeug 2, das dem Kraftfahrzeug 1 voraus fährt, hat einen vorgegebenen Sicherheitsabstand aₛ zu dem Kraftfahrzeug 1, da dessen Fahrverhalten abstandsgeregelt ist.

Wie in Fig. 1 zu erkennen ist, hat dadurch, daß das Kraftfahrzeug 2 den größten Teil der Kurve 3 bereits durchfahren hat, das Kraftfahrzeug 1 jedoch erst zu Beginn der Kurve fährt, das Kraftfahrzeug 2 den Erfassungsbereich 4 der Erfassungseinrichtung verlassen. Das bedeutet, daß die Erfassungseinrichtung kein Regelobjekt mehr detektiert und prinzipiell das Kraftfahrzeug 1 beschleunigt, um eine maximale Geschwindigkeit zu erreichen.

Erfindungsgemäß wird jedoch während des Verlustes des vorausfahrenden Kraftfahrzeuges aus dem Erfassungsbereich der Erfassungseinrichtung die im Zeitpunkt vor dem Verlust gefahrene Geschwindigkeit des Kraftfahrzeuges 1 solange beibehalten, bis eine vorgegebene Verzögerungszeit tᵥ abgelaufen ist oder bis erneut ein voraus fahrendes Kraftfahrzeug von der Erfassungseinrichtung als Regelobjekt erfaßt wird. Somit behält das Kraftfahrzeug 1 über die vorgegebene Verzögerungszeit tᵥ seine Geschwindigkeit bei, so daß nach Ablauf der Verzögerungszeit tᵥ die in Fig. 2 dargestellte Fahrsituation erreicht wird. Dabei ist angenommen worden, daß die Verzögerungszeit tᵥ im wesentlichen der Sicherheitszeit tₛ entspricht. Somit befindet sich das Kraftfahrzeug 1 in Fig. 2 im wesentlichen im Bereich des Ortes des Kraftfahrzeuges 2 im Zeitpunkt des Verlustes aus dem Erfassungsbereich der Erfassungseinrichtung, also ungefähr die in Fig. 1 dargestellte Position des Kraftfahrzeuges 2. Somit wird eine Fahrsituation erreicht, in der das Kraftfahrzeug 2 wieder im Erfassungsbereich der Erfassungseinrichtung des Kraftfahrzeuges 1 fährt. Somit kann das Kraftfahrzeug 1 wieder auf den durch die eingestellte Sicherheitszeit tₛ und die Kraftfahrzeuggeschwindigkeit v abhängigen Sicherheitsabstand aₛ geregelt werden. Der Ablauf des erfindungsgemäßen Verfahrens gewährleistet somit ein komfortables und zugleich sicheres Fahrverhalten des abstandsgeregelten Kraftfahrzeuges 1 innerhalb einer Kurve.

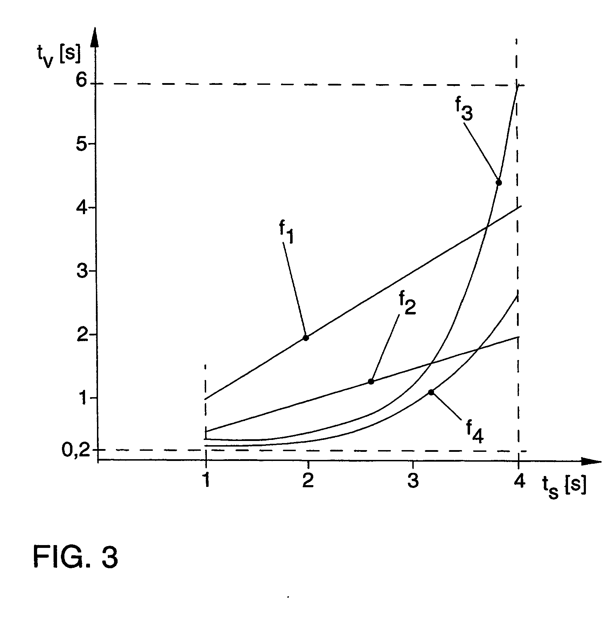

In Fig. 3 sind verschiedene Funktionen f₁ bis f₄ der Abhängigkeit der Verzögerungszeit tᵥ von der Sicherheitszeit tₛ dargestellt.

Die Funktionen f₁ und f₂ sind lineare Funktionen der Verzögerungszeit tᵥ von der Sicherheitszeit tₛ. Die Steigung s der linearen Funktionen f₁ ist gleich eins so daß in jedem Fall die Verzögerungszeit tᵥ der Sicherheitszeit tₛ entspricht. Bei der Funktion f₂ ist die Steigung s dagegen kleiner als eins und liegt im Bereich von 0,5. Das bedeutet, daß die Verzögerungszeit tᵥ jeweils im wesentlichen der Hälfte der eingestellten Sicherheitszeit entspricht. Dadurch wird ein sportlicheres Fahrverhalten des Kraftfahrzeuges hervorgerufen, denn sowohl bei Kurvenfahrten als auch bei Überholvorgängen setzt eine Beschleunigung des Kraftfahrzeuges bereits nach einer kürzeren Verzögerungszeit als bei der Funktion f₁ ein.

Die Funktionen f₃ und f₄ sind nichtlineare Funktionen der Verzögerungszeit tᵥ von der Sicherheitszeit tₛ. Die Nichtlinearität ist dadurch charakterisiert, daß die Steigung s ausgehend von einem Ausgangswert s₀ stetig auf einen maximalen Wert Sₘₐₓ vergrößert wird. Der Unterschied der Funktionen f₃ und f₄ liegt darin, daß bei der Funktion f₄ die Verzögerungszeiten in jedem Fall kleiner als die Sicherheitszeiten tₛ sind, während bei der Funktion f₃ im Bereich der maximalen Sicherheitszeiten die Verzögerungszeiten größer als die maximale Sicherheitszeit sind t_{s,max}. Somit wird mit der Funktion f₃ für kleine eingestellte Sicherheitszeiten ein sportlichen Fahrverhalten hervorgerufen, während bei großen Sicherheitszeiten tₛ, die vom Benutzer eingestellt werden, ein besonders sicheres und komfortables Fahrverhalten durch das erfindungsgemäße Verfahren hervorgerufen werden.

Wie in Fig. 3 mit gestrichelten Linien dargestellt ist, liegen die einstellbaren Werte für die Sicherheitszeiten tₛ zwischen 1,0s und 4,0s, während die Verzögerungszeiten tᵥ zwischen 0,2s und 6,0s eingestellt werden können.

## Patentansprüche

1. Verfahren zur Regelung der Geschwindigkeit eines Kraftfahrzeuges und des Abstandes des Kraftfahrzeuges zu mindestens einem vorausfahrenden Kraftfahrzeug,
- bei dem eine den Sicherheitsabstand (aₛ) zu dem vorausfahrenden Kraftfahrzeug definierende Sicherheitszeit (tₛ) innerhalb vorgegebener Grenzen (t_{s,min}) und (t_{s,max}) eingestellt wird.
- bei dem mit Hilfe einer Erfassungseinrichtung die Geschwindigkeit (v) des Kraftfahrzeuges sowie der Abstand (a) zu dem vorausfahrenden Kraftfahrzeug bestimmt werden, und
- bei dem der Sicherheitsabstand (aₛ) aus der Geschwindigkeit (v) des Kraftfahrzeuges und der Sicherheitszeit (tₛ) berechnet wird und bei einer Abweichung des erfassten Abstandes (a) vom Sicherheitsabstand (aₛ) das Kraftfahrzeug abgebremst oder beschleunigt wird,
- wobei während eines Verlustes des vorausfahrenden Kraftfahrzeuges aus dem Erfassungsbereich der Erfassungseinrichtung die im Zeitpunkt vor dem Verlust gefahrene Geschwindigkeit solange beibehalten wird, bis eine vorgegebene Verzögerungszeit (tᵥ) abgelaufen ist oder bis erneut ein vorausfahrendes Kraftfahrzeug von der Erfassungseinrichtung als Regelobjekt erfasst wird,
**dadurch gekennzeichnet,**
- **dass** der Wert der Verzögerungszeit (tᵥ) als lineare Funktion der Sicherheitszeit (tₛ) bestimmt wird, wobei die Steigung (s) der linearen Funktion kleiner eins gesetzt wird, oder als nichtlineare Funktion der Sicherheitszeit (tₛ) bestimmt wird, wobei die Steigung (s) der nichtlinearen Funktion ausgehend von einem Ausgangswert (sₒ) stetig auf einen maximalen Wert (Sₘₐₓ) vergrößert wird, wobei der Wert der Verzögerungszeit (tᵥ) für die maximale Sicherheitszeit (t_{s,max}) kleiner der maximalen Sicherheitszeit (t_{s,max}) eingestellt wird.

2. Verfahren nach Anspruch 1, **dadurch gekennzeichnet, dass** der Wert der Sicherheitszeit (tₛ) auf einen Wert zwischen 1,0s und 4,0s eingestellt wird.

3. Verfahren nach Anspruch 1 oder Anspruch 2, **dadurch gekennzeichnet, dass** der Wert der Verzögerungszeit (tᵥ) auf einen Wert zwischen 0,2s und 6,0s eingestellt wird.

## Claims

1. Method for controlling the velocity of a motor vehicle and of the distance between the motor vehicle and at least one motor vehicle travelling in front,
- in which a safe time (tₛ) which defines the safe distance (aₛ) from the motor vehicle travelling in front is set within predefined limits (t_{s,min}) and (t_{s,max}),
- in which the velocity, (v) of the motor vehicle and the distance (a) from the motor vehicle travelling in front are determined using a sensing device, and
- in which the safe distance (aₛ) is calculated from the velocity (v) of the motor vehicle and the safe time (tₛ), and when the sensed distance (a) differs from the safe distance (aₛ) the motor vehicle is braked or accelerated,
- wherein, while the motor vehicle travelling in front is lost from the sensing range of the sensing device, the velocity at which the vehicle was travelling before it was lost is maintained until a predefined delay (tᵥ) has expired or until a motor vehicle travelling in front is sensed again as a control object by the sensing device, **characterized**
- **in that** the value of the delay (tᵥ) is determined as a linear function of the safe time (tₛ), wherein the positive gradient (s) of the linear function is set to less than one or is determined as a non-linear function of the safe time (tₛ), wherein the positive gradient (s) of the non-linear function is increased continuously to a maximum value (Sₘₐₓ) starting from an initial value (so), wherein the value of the delay (tᵥ) for the maximum safe time (t_{s,max}) is set to be less than the maximum safe time (t_{s,max}).

2. Method according to Claim 1, **characterized in that** the value of the safe time (tₛ) is set to a value between 1.0s and 4.0s.

3. Method according to Claim 1 or 2, **characterized in that** the value of the delay (tᵥ) is set to a value between 0.2s and 6.0s.

## Revendications

1. Procédé de régulation de la vitesse d'un véhicule automobile et de la distance entre le véhicule automobile et au moins un véhicule automobile qui le précède,
- avec lequel un temps de sécurité (tₛ) qui définit la distance de sécurité (aₛ) par rapport au véhicule automobile qui précède est réglé entre deux limites (t_{s, min}) et (tₛ, ₘₐₓ) prédéfinies,
- avec lequel la vitesse (v) du véhicule automobile ainsi que la distance (a) par rapport au véhicule automobile qui le précède sont déterminées à l'aide d'un dispositif de détection, et
- avec lequel la distance de sécurité (aₛ) est calculée à partir de la vitesse (v) du véhicule automobile et du temps de sécurité (tₛ) et avec lequel un écart entre la distance (a) détectée et la distance de sécurité (aₛ) provoque une accélération ou un freinage du véhicule automobile,
- pendant une sortie du véhicule automobile qui précède de la zone de détection du dispositif de détection, la vitesse de déplacement au moment de la sortie étant conservée jusqu'à ce qu'un temps de retard (tᵥ) prédéfini se soit écoulé ou jusqu'à ce qu'un véhicule automobile qui précède soit de nouveau détecté en tant qu'objet de régulation par le dispositif de détection,
**caractérisé en ce**
- la valeur du temps de retard (tᵥ) est définie en tant que fonction linéaire du temps de sécurité (tₛ), la pente (s) de la fonction linéaire étant fixée inférieure à un, ou est définie en tant que fonction non linéaire du temps de sécurité (tₛ), la pente (s) de la fonction non linéaire augmentant constamment à partir d'une valeur initiale (s₀) jusqu'à une valeur maximale (sₘₐₓ), la valeur du temps de retard (tᵥ) pour le temps de sécurité maximum (tₛ, ₘₐₓ) étant réglée inférieure au temps de sécurité maximum (tₛ, ₘₐₓ).

2. Procédé selon la revendication 1, **caractérisé en ce que** la valeur du temps de sécurité (tₛ) est réglée à une valeur entre 1,0 s et 4,0 s.

3. Procédé selon la revendication 1 ou la revendication 2, **caractérisé en ce que** la valeur du temps de retard (tᵥ) est réglée à une valeur entre 0,2 s et 6,0 s.
